# EUROPEAN PATENT APPLICATION

(11) **EP 4 848 781 A1**
(43) Date of publication of application: **02.12.2026**
(21) Application number: 24923317.2
(22) Date of filing: 14.09.2024
(51) Int. Cl.: H04W 24/02

(54) **COMMUNICATION METHOD, APPARATUS AND SYSTEM**

(30) Priority: 08.02.2024 CN 202410179406
(71) Applicant: Huawei Technologies Co., Ltd., Shenzhen, Guangdong 518129 (CN)
(72) Inventor: RUAN, Wei, Shenzhen, Guangdong 518129 (CN); MA, Yunsi, Shenzhen, Guangdong 518129 (CN)
(74) Representative: Huawei European IPR
(86) International application number: PCT/CN2024/119166
(87) International publication number: WO 2025/167111

(57) **Abstract**

Embodiments of this application provide a communication method and apparatus, and a system, to reduce air interface overheads in a Wi-Fi environment, and further improve a throughput of a wireless network. The method includes: receiving a request frame from a first station, where the request frame is used to request communication quality information; and sending a response frame to the first station, where the response frame includes communication quality information of a plurality of access points, the plurality of access points are access points in a first access point set, and the first access point set includes a first access point.

## Description

This application claims priority to Chinese Patent Application No. 202410179406.4, filed with the China National Intellectual Property Administration on February 8, 2024 and entitled "COMMUNICATION METHOD AND APPARATUS, AND SYSTEM", which is incorporated herein by reference in its entirety.

### TECHNICAL FIELD

This application relates to the field of wireless fidelity (wireless fidelity, Wi-Fi) technologies, and in particular, to a communication method and apparatus, and a system.

### BACKGROUND

In current Wi-Fi technologies, it is assumed that a station (station, STA) sends a probe request (probe request) frame, each AP receiving the probe request frame replies with a probe response (probe response) frame to the STA through channel contention.

However, in an area in which there are a plurality of APs and a plurality of STAs, each AP replies with a probe response frame, which causes excessively high air interface overheads, and further reduces a throughput of a wireless network.

### SUMMARY

Embodiments of this application provide a communication method and apparatus, and a system, to reduce air interface overheads in a Wi-Fi environment, and further improve a throughput of a wireless network.

To achieve the foregoing objectives, the following technical solutions are used in embodiments of this application.

According to a first aspect, a communication method is provided. An apparatus for performing the communication method may be a first access point, or may be a module used in a first access point, for example, a chip or a chip system. The communication method includes: receiving a request frame from a first station, where the request frame is used to request communication quality information; and sending a response frame to the first station, where the response frame includes communication quality information of a plurality of access points, and the plurality of access points are access points in a first access point set in which the first access point is located.

In the communication method provided in embodiments of this application, in the plurality of access points, only the first access point replies with one response frame to the first station, and the response frame may carry the communication quality information of the plurality of access points. Compared with a method in which each of a plurality of access points replies with a response frame, the communication method provided in embodiments of this application can reduce air interface overheads, to improve a network throughput.

With reference to the first aspect, in a possible implementation, the response frame further includes identification information of the plurality of access points.

With reference to the first aspect, in a possible implementation, there is an association relationship between the first access point and the first station, the association relationship is stored by each of the plurality of access points, and the association relationship is used by the first access point to obtain the communication quality information of the plurality of access points. In this solution, because an access point in the plurality of access points other than the first access point stores the association relationship between the first access point and the first station, after receiving the request frame from the first station, the another access point may send respective information to the first access point. This helps the first access point obtain the communication quality information of the plurality of access points.

With reference to the first aspect, in a possible implementation, quality of communication between the first access point and the first station is higher than or equal to a first threshold. This solution helps ensure transmission quality of the response frame.

With reference to the first aspect, in a possible implementation, the first access point is an access point selected by a first device, and the first device is configured to manage an access point in the first access point set. In this solution, the first device may be a device that has an upper-layer function of scheduling, managing, or controlling the plurality of access points. For example, the first device may be an access point like a primary access point, or the first device may be an access controller AC.

With reference to the first aspect, in a possible implementation, the method further includes: receiving the communication quality information of the plurality of access points. In this solution, the plurality of access points directly communicate with the first access point, to help the first access point obtain the communication quality information of the plurality of access points more quickly.

With reference to the first aspect, in a possible implementation, the method further includes: receiving the communication quality information of the plurality of access points from the first device. When the plurality of access points and the first access point have different operating channels and cannot directly communicate with each other, this solution helps the first access point obtain the communication quality information of the plurality of access points.

With reference to the first aspect, in a possible implementation, the first access point is an access point, in the first access point set, that has best signal quality with the first station. This solution helps ensure transmission quality of the response frame.

With reference to the first aspect, in a possible implementation, the first access point is an access point, in the first access point set, that is closest to the first station; or the first access point is an access point with a maximum received signal strength indication RSSI or a maximum signal-to-noise ratio SNR in the first access point set.

With reference to the first aspect, in a possible implementation, the communication quality information of the plurality of access points includes communication quality information of each of the plurality of access points, and the communication quality information of each access point includes at least one of the following: quality information of a channel between each access point and the first station, quality information of a signal between each access point and the first station, or a roaming capability of each access point.

With reference to the first aspect, in a possible implementation, the quality information of the channel between each access point and the first station includes at least one of the following: a symbol error rate SER, channel bandwidth, a channel capacity, or a channel fading coefficient. The quality information of the signal between each access point and the first station includes at least one of the following: an RSSI of a signal received by each access point from the first station, RSRP of a signal received by each access point from the first station, an SINR of a signal received by each access point from the first station, or RSRQ of a signal received by each access point from the first station.

With reference to the first aspect, in a possible implementation, the request frame carries identification information of the first access point. In this solution, the first station may specify an access point that replies with the response frame, that is, the first station may specify the first access point. For example, the first access point in this solution may alternatively be an access point that has an association relationship with the first station.

With reference to the first aspect, in a possible implementation, the communication quality information of the plurality of access points includes RSSIs of signals received by the plurality of access points from the first station, and/or roaming capabilities of the plurality of access points.

With reference to the first aspect, in a possible implementation, the sending the response frame to the first station includes: sending the response frame to the first station through a first channel, where the first channel is one of a plurality of operating channels of the first station. In this solution, the first station may wait to receive the response frame through the first channel, and does not need to wait to receive a probe response frame through each scanned channel. This can shorten time for active scanning by the first station, to help the first station quickly determine a roaming target access point.

With reference to the first aspect, in a possible implementation, the request frame includes an identifier of the first channel.

With reference to the first aspect, in a possible implementation, the method further includes: receiving the identifier of the first channel from the first station. In this solution, the identifier of the first channel may be, for example, included in a management frame or a control frame.

According to a second aspect, a communication method is provided. An apparatus for performing the communication method may be a first station, or may be a module used in a first station, for example, a chip or a chip system. The communication method includes: sending a request frame, where the request frame is used to request communication quality information; and receiving a response frame from a first access point, where the response frame includes communication quality information of a plurality of access points, and the plurality of access points are access points in a first access point set in which the first access point is located.

With reference to the second aspect, in a possible implementation, the response frame further includes identification information of the plurality of access points.

With reference to the second aspect, in a possible implementation, there is an association relationship between the first access point and the first station, the association relationship is stored by each of the plurality of access points, and the association relationship is used by the first access point to obtain the communication quality information of the plurality of access points.

With reference to the second aspect, in a possible implementation, the first access point is an access point selected by a first device, and the first device is configured to manage an access point in the first access point set.

With reference to the second aspect, in a possible implementation, the first device includes an access point or an access controller AC.

With reference to the second aspect, in a possible implementation, the first access point is an access point, in the first access point set, that has best signal quality with the first station.

With reference to the second aspect, in a possible implementation, the first access point is an access point, in the first access point set, that is closest to the first station; or the first access point is an access point with a maximum received signal strength indication RSSI or a maximum signal-to-noise ratio SNR in the first access point set.

With reference to the second aspect, in a possible implementation, the communication quality information of the plurality of access points includes communication quality information of each of the plurality of access points, and the communication quality information of each access point includes at least one of the following: quality information of a channel between each access point and the first station, quality information of a signal between each access point and the first station, or a roaming capability of each access point.

With reference to the second aspect, in a possible implementation, the quality information of the channel between each access point and the first station includes at least one of the following: a symbol error rate SER, channel bandwidth, a channel capacity, or a channel fading coefficient.

The quality information of the signal between each access point and the first station includes at least one of the following: an RSSI of a signal received by each access point from the first station, RSRP of a signal received by each access point from the first station, an SINR of a signal received by each access point from the first station, or RSRQ of a signal received by each access point from the first station.

With reference to the second aspect, in a possible implementation, the request frame carries identification information of the first access point.

With reference to the second aspect, in a possible implementation, the receiving the response frame from the first access point includes: receiving the response frame from the first access point through a first channel, where the first channel is one of a plurality of operating channels of the first station.

With reference to the second aspect, in a possible implementation, the sending the request frame includes: separately sending the request frame to the plurality of access points through a plurality of channels, where a communication channel between the first access point and the first station is the first channel.

With reference to the second aspect, in a possible implementation, the request frame includes an identifier of the first channel.

With reference to the second aspect, in a possible implementation, the method further includes: sending the identifier of the first channel.

According to a third aspect, a communication method is provided. Specifically, a first station sends a request frame, where the request frame is used to request communication quality information. A first access point receives the request frame from the first station, and sends a response frame to the first station, where the response frame includes communication quality information of a plurality of access points, the plurality of access points are access points in a first access point set in which the first access point is located, and the plurality of access points include the first access point.

With reference to the third aspect, in a possible implementation, the response frame further includes identification information of the plurality of access points.

With reference to the third aspect, in a possible implementation, the plurality of access points further include a second access point. The method further includes: The second access point stores an association relationship between the first access point and the first station. The second access point sends communication quality information of the second access point to the first access point based on the association relationship. The first access point receives the communication quality information from the second access point.

With reference to the third aspect, in a possible implementation, that the second access point sends the communication quality information of the second access point to the first access point based on the association relationship includes: When receiving the request frame from the first station, the second access point sends the communication quality information of the second access point to the first access point based on the association relationship.

With reference to the third aspect, in a possible implementation, the plurality of access points further include a second access point, and the second access point is configured to manage an access point in the first access point set. The method further includes: The plurality of access points separately send communication quality information of each access point to the second access point. The second access point separately receives the communication quality information of each access point from the plurality of access points. The second access point sends the communication quality information of the plurality of access points to the first access point. The first access point receives the communication quality information of the plurality of access points from the second access point.

With reference to the third aspect, in a possible implementation, the first access point is an access point selected by the second access point.

With reference to the third aspect, in a possible implementation, the plurality of access points separately send communication quality information of each access point to a first device. The first device is configured to manage an access point in the first access point set, and the first device separately receives the communication quality information of each access point from the plurality of access points. The first device sends the communication quality information of the plurality of access points to the first access point. The first access point receives the communication quality information of the plurality of access points from the first device.

With reference to the third aspect, in a possible implementation, the first access point is an access point selected by the first device.

With reference to the third aspect, in a possible implementation, the first access point is an access point, in the first access point set, that has best signal quality with the first station.

With reference to the third aspect, in a possible implementation, the first access point is an access point, in the first access point set, that is closest to the first station; or the first access point is an access point with a maximum received signal strength indication RSSI or a maximum signal-to-noise ratio SNR in the first access point set.

With reference to the third aspect, in a possible implementation, the communication quality information of the plurality of access points includes communication quality information of each of the plurality of access points, and the communication quality information of each access point includes at least one of the following: quality information of a channel between each access point and the first station, quality information of a signal between each access point and the first station, or a roaming capability of each access point.

With reference to the third aspect, in a possible implementation, the quality information of the channel between each access point and the first station includes at least one of the following: a symbol error rate SER, channel bandwidth, a channel capacity, or a channel fading coefficient. The quality information of the signal between each access point and the first station includes at least one of the following: an RSSI of a signal received by each access point from the first station, RSRP of a signal received by each access point from the first station, an SINR of a signal received by each access point from the first station, or RSRQ of a signal received by each access point from the first station.

With reference to the third aspect, in a possible implementation, the request frame carries identification information of the first access point.

With reference to the third aspect, in a possible implementation, the plurality of access points further include a second access point. The method further includes: The second access point sends communication quality information of the second access point to the first access point based on the identification information of the first access point. The first access point receives the communication quality information from the second access point.

With reference to the third aspect, in a possible implementation, the communication quality information of the plurality of access points includes RSSIs of signals received by the plurality of access points from the first station, and/or roaming capabilities of the plurality of access points.

With reference to the third aspect, in a possible implementation, quality of communication between the first access point and the first station is higher than or equal to a first threshold.

With reference to the third aspect, in a possible implementation, that the first access point sends the response frame to the first station includes: The first access point sends the response frame to the first station through a first channel, where the first channel is one of a plurality of operating channels of the first station.

With reference to the third aspect, in a possible implementation, that the first station sends the request frame includes: The first station separately sends the request frame to the plurality of access points through a plurality of channels, where a communication channel between the first access point and the first station is the first channel. That the first access point receives the request frame from the first station includes: The first access point receives the request frame from the first station through the first channel.

With reference to the third aspect, in a possible implementation, the request frame includes an identifier of the first channel.

With reference to the third aspect, in a possible implementation, the method further includes: The first station sends the identifier of the first channel to the first access point. The first access point receives the identifier of the first channel from the first station.

According to a fourth aspect, a communication apparatus is provided, and is configured to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible implementation, the communication apparatus includes a receiving module and a sending module. The receiving module is configured to receive a request frame from a first station, where the request frame is used to request communication quality information. The sending module is configured to send a response frame to the first station, where the response frame includes communication quality information of a plurality of access points, and the plurality of access points are access points in a first access point set in which the communication apparatus is located.

With reference to the fourth aspect, in a possible implementation, the response frame further includes identification information of the plurality of access points.

With reference to the fourth aspect, in a possible implementation, there is an association relationship between the communication apparatus and the first station, the association relationship is stored by each of the plurality of access points, and the association relationship is used by the communication apparatus to obtain the communication quality information of the plurality of access points.

With reference to the fourth aspect, in a possible implementation, quality of communication between the communication apparatus and the first station is higher than or equal to a first threshold.

With reference to the fourth aspect, in a possible implementation, the communication apparatus is an access point selected by a first device, and the first device is configured to manage an access point in the first access point set.

With reference to the fourth aspect, in a possible implementation, the first device is an access point or an access controller AC.

With reference to the fourth aspect, in a possible implementation, the receiving module is further configured to receive the communication quality information of the plurality of access points.

With reference to the fourth aspect, in a possible implementation, the receiving module is further configured to receive the communication quality information of the plurality of access points from the first device.

With reference to the fourth aspect, in a possible implementation, the communication apparatus is an access point, in the first access point set, that has best signal quality with the first station.

With reference to the fourth aspect, in a possible implementation, the communication apparatus is an access point, in the first access point set, that is closest to the first station; or the communication apparatus is an access point with a maximum received signal strength indication RSSI or a maximum signal-to-noise ratio SNR in the first access point set.

With reference to the fourth aspect, in a possible implementation, the communication quality information of the plurality of access points includes communication quality information of each of the plurality of access points, and the communication quality information of each access point includes at least one of the following: quality information of a channel between each access point and the first station, quality information of a signal between each access point and the first station, or a roaming capability of each access point.

With reference to the fourth aspect, in a possible implementation, the quality information of the channel between each access point and the first station includes at least one of the following: a symbol error rate SER, channel bandwidth, a channel capacity, or a channel fading coefficient. The quality information of the signal between each access point and the first station includes at least one of the following: an RSSI of a signal received by each access point from the first station, RSRP of a signal received by each access point from the first station, an SINR of a signal received by each access point from the first station, or RSRQ of a signal received by each access point from the first station.

With reference to the fourth aspect, in a possible implementation, the request frame carries identification information of the communication apparatus.

With reference to the fourth aspect, in a possible implementation, the communication quality information of the plurality of access points includes RSSIs of signals received by the plurality of access points from the first station, and/or roaming capabilities of the plurality of access points.

With reference to the fourth aspect, in a possible implementation, the sending module is specifically configured to send the response frame to the first station through a first channel, where the first channel is one of a plurality of operating channels of the first station.

With reference to the fourth aspect, in a possible implementation, the request frame includes an identifier of the first channel.

With reference to the fourth aspect, in a possible implementation, the receiving module is further configured to receive the identifier of the first channel from the first station.

According to a fifth aspect, a communication apparatus is provided, and is configured to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fifth aspect, in a possible implementation, the communication apparatus includes a sending module and a receiving module. The sending module is configured to send a request frame, where the request frame is used to request communication quality information. The receiving module is configured to receive a response frame from a first access point, where the response frame includes communication quality information of a plurality of access points, and the plurality of access points are access points in a first access point set in which the first access point is located.

With reference to the fifth aspect, in a possible implementation, the response frame further includes identification information of the plurality of access points.

With reference to the fifth aspect, in a possible implementation, there is an association relationship between the first access point and the communication apparatus, the association relationship is stored by each of the plurality of access points, and the association relationship is used by the first access point to obtain the communication quality information of the plurality of access points.

With reference to the fifth aspect, in a possible implementation, the first access point is an access point selected by a first device, and the first device is configured to manage an access point in the first access point set.

With reference to the fifth aspect, in a possible implementation, the first device includes an access point or an access controller AC.

With reference to the fifth aspect, in a possible implementation, the first access point is an access point, in the first access point set, that has best signal quality with the communication apparatus.

With reference to the fifth aspect, in a possible implementation, the first access point is an access point, in the first access point set, that is closest to the communication apparatus; or the first access point is an access point with a maximum received signal strength indication RSSI or a maximum signal-to-noise ratio SNR in the first access point set.

With reference to the fifth aspect, in a possible implementation, the communication quality information of the plurality of access points includes communication quality information of each of the plurality of access points, and the communication quality information of each access point includes at least one of the following: quality information of a channel between each access point and the first station, quality information of a signal between each access point and the first station, or a roaming capability of each access point.

With reference to the fifth aspect, in a possible implementation, the quality information of the channel between each access point and the first station includes at least one of the following: a symbol error rate SER, channel bandwidth, a channel capacity, or a channel fading coefficient. The quality information of the signal between each access point and the first station includes at least one of the following: an RSSI of a signal received by each access point from the first station, RSRP of a signal received by each access point from the first station, an SINR of a signal received by each access point from the first station, or RSRQ of a signal received by each access point from the first station.

With reference to the fifth aspect, in a possible implementation, the request frame carries identification information of the first access point.

With reference to the fifth aspect, in a possible implementation, the receiving module is specifically configured to receive the response frame from the first access point through a first channel, where the first channel is one of a plurality of operating channels of the communication apparatus.

With reference to the fifth aspect, in a possible implementation, the sending module is specifically configured to separately send the request frame to the plurality of access points through a plurality of channels, where a communication channel between the first access point and the communication apparatus is the first channel.

With reference to the fifth aspect, in a possible implementation, the request frame includes an identifier of the first channel.

With reference to the fifth aspect, in a possible implementation, the sending module is further configured to send the identifier of the first channel.

According to a sixth aspect, a transmission system is provided, and includes a first station and a plurality of access points. The plurality of access points belong to a first access point set, and the plurality of access points include a first access point. The first station is configured to send a request frame, where the request frame is used to request communication quality information. The first access point is configured to receive the request frame from the first station, and send a response frame to the first station, where the response frame includes communication quality information of the plurality of access points.

With reference to the sixth aspect, in a possible implementation, the response frame further includes identification information of the plurality of access points.

With reference to the sixth aspect, in a possible implementation, the plurality of access points further include a second access point. The second access point is configured to store an association relationship between the first access point and the first station. The second access point is further configured to send communication quality information of the second access point to the first access point based on the association relationship. The first access point is further configured to receive the communication quality information from the second access point.

With reference to the sixth aspect, in a possible implementation, that the second access point is further configured to send the communication quality information of the second access point to the first access point based on the association relationship includes: When receiving the request frame from the first station, the second access point is further configured to send the communication quality information of the second access point to the first access point based on the association relationship.

With reference to the sixth aspect, in a possible implementation, the plurality of access points further include a second access point, and the second access point is configured to manage an access point in the first access point set. The plurality of access points are configured to separately send communication quality information of each access point to the second access point. The second access point is configured to separately receive the communication quality information of each access point from the plurality of access points. The second access point is further configured to send the communication quality information of the plurality of access points to the first access point. The first access point is further configured to receive the communication quality information of the plurality of access points from the second access point.

With reference to the sixth aspect, in a possible implementation, the first access point is an access point selected by the second access point.

With reference to the sixth aspect, in a possible implementation, the transmission system further includes a first device, and the first device is configured to manage an access point in the first access point set. The plurality of access points are configured to separately send communication quality information of each access point to the first device. The first device is configured to separately receive the communication quality information of each access point from the plurality of access points. The first device is further configured to send the communication quality information of the plurality of access points to the first access point. The first access point is further configured to receive the communication quality information of the plurality of access points from the first device.

With reference to the sixth aspect, in a possible implementation, the first access point is an access point selected by the first device.

With reference to the sixth aspect, in a possible implementation, the first access point is an access point, in the first access point set, that has best signal quality with the first station.

With reference to the sixth aspect, in a possible implementation, the first access point is an access point, in the first access point set, that is closest to the first station; or the first access point is an access point with a maximum received signal strength indication RSSI or a maximum signal-to-noise ratio SNR in the first access point set.

With reference to the sixth aspect, in a possible implementation, the communication quality information of the plurality of access points includes communication quality information of each of the plurality of access points, and the communication quality information of each access point includes at least one of the following: quality information of a channel between each access point and the first station, quality information of a signal between each access point and the first station, or a roaming capability of each access point.

With reference to the sixth aspect, in a possible implementation, the quality information of the channel between each access point and the first station includes at least one of the following: a symbol error rate SER, channel bandwidth, a channel capacity, or a channel fading coefficient. The quality information of the signal between each access point and the first station includes at least one of the following: an RSSI of a signal received by each access point from the first station, RSRP of a signal received by each access point from the first station, an SINR of a signal received by each access point from the first station, or RSRQ of a signal received by each access point from the first station.

With reference to the sixth aspect, in a possible implementation, the request frame carries identification information of the first access point.

With reference to the sixth aspect, in a possible implementation, the plurality of access points further include a second access point, and the second access point is configured to send communication quality information of the second access point to the first access point based on the identification information of the first access point. The first access point is configured to receive the communication quality information from the second access point.

With reference to the sixth aspect, in a possible implementation, the communication quality information of the plurality of access points includes RSSIs of signals received by the plurality of access points from the first station, and/or roaming capabilities of the plurality of access points.

With reference to the sixth aspect, in a possible implementation, quality of communication between the first access point and the first station is higher than or equal to a first threshold.

With reference to the sixth aspect, in a possible implementation, the first access point is specifically configured to send the response frame to the first station through a first channel, where the first channel is one of a plurality of operating channels of the first station.

With reference to the sixth aspect, in a possible implementation, the first station is specifically configured to separately send the request frame to the plurality of access points through a plurality of channels, where a communication channel between the first access point and the first station is the first channel. The first access point is specifically configured to receive the request frame from the first station through the first channel.

With reference to the sixth aspect, in a possible implementation, the request frame includes an identifier of the first channel.

With reference to the sixth aspect, in a possible implementation, the first station is further configured to send the identifier of the first channel to the first access point. The first access point is further configured to receive the identifier of the first channel from the first station.

According to a seventh aspect, a communication apparatus is provided, and includes a processor. The processor is configured to: after being coupled to a memory and reading computer instructions stored in the memory, perform, according to the instructions, the method in the first aspect or the second aspect.

With reference to the seventh aspect, in a possible implementation, the communication apparatus further includes the memory, and the memory is configured to store the computer instructions.

With reference to the seventh aspect, in a possible implementation, the communication apparatus further includes a communication interface. The communication interface is used by the communication apparatus to communicate with another device. For example, the communication interface may be a transceiver, an input/output interface, an interface circuit, an output circuit, an input circuit, a pin, or a related circuit.

With reference to the seventh aspect, in a possible implementation, the communication apparatus may be a chip or a chip system. When the communication apparatus is the chip system, the communication apparatus may include a chip, or may include a chip and another discrete device.

With reference to the seventh aspect, in a possible implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eighth aspect, a computer-readable storage medium is provided. The computer-readable storage medium stores instructions. When the instructions are run on a computer, the computer is enabled to perform the method in the first aspect or the second aspect.

According to a ninth aspect, a computer program product including instructions is provided. When the computer program product runs on a computer, the computer is enabled to perform the method in the first aspect or the second aspect.

According to a tenth aspect, a chip is provided, and the chip includes a processor. The processor is configured to run instructions, so that an apparatus including the chip performs the method in the first aspect or the second aspect.

With reference to the tenth aspect, in a possible implementation, the chip further includes a memory, and the memory is configured to store the instructions.

For technical effect brought by any possible implementation of the second aspect to the tenth aspect, refer to technical effect brought by the first aspect or different implementations of the first aspect. Details are not described herein again.

### BRIEF DESCRIPTION OF DRAWINGS

FIG. 1 is a diagram of deployment of neighboring APs of an STA according to an embodiment of this application;
FIG. 2 is a diagram of a network architecture of a transmission system according to an embodiment of this application;
FIG. 3 is a diagram of composition of a device according to an embodiment of this application;
FIG. 4 is a flowchart of a communication method according to an embodiment of this application;
FIG. 5A is a diagram 1 of transmission of a response frame according to an embodiment of this application;
FIG. 5B is a diagram 2 of transmission of a response frame according to an embodiment of this application;
FIG. 6A is a diagram 3 of transmission of a response frame according to an embodiment of this application;
FIG. 6B is a diagram 4 of transmission of a response frame according to an embodiment of this application; and
FIG. 7 is a diagram of a structure of a communication apparatus according to an embodiment of this application.

### DESCRIPTION OF EMBODIMENTS

For ease of understanding technical solutions in embodiments of this application, the following first briefly describes technologies or terms related to this application.

### 1. AP coordination set (coordination set) and neighboring AP of an STA

The AP coordination set may be a set of a plurality of APs that can cooperate with each other. Usually, the APs in the AP coordination set may have same attributes. The following describes the same attributes based on a procedure of creating the AP coordination set and a procedure of deploying a new AP. When the AP coordination set is created, in a possible implementation, all the APs in the AP coordination set are deployed before or after a time point. In other words, the same attributes may mean deployment in a same time period. In another possible implementation, all the APs in the AP coordination set have same capabilities, for example, supporting joint transmission or coordinated beamforming, or supporting at least one of coordinated time division multiplexing, coordinated frequency division multiplexing, or coordinated space division multiplexing. In other words, the same attributes may mean the same capabilities.

When a new AP is deployed, the new AP may select a nearby AP coordination set to join. Alternatively, if the new AP may receive information from a plurality of AP coordination sets, the new AP may select one AP coordination set from the plurality of AP coordination sets to join. In other words, the same attributes may mean a same deployment range.

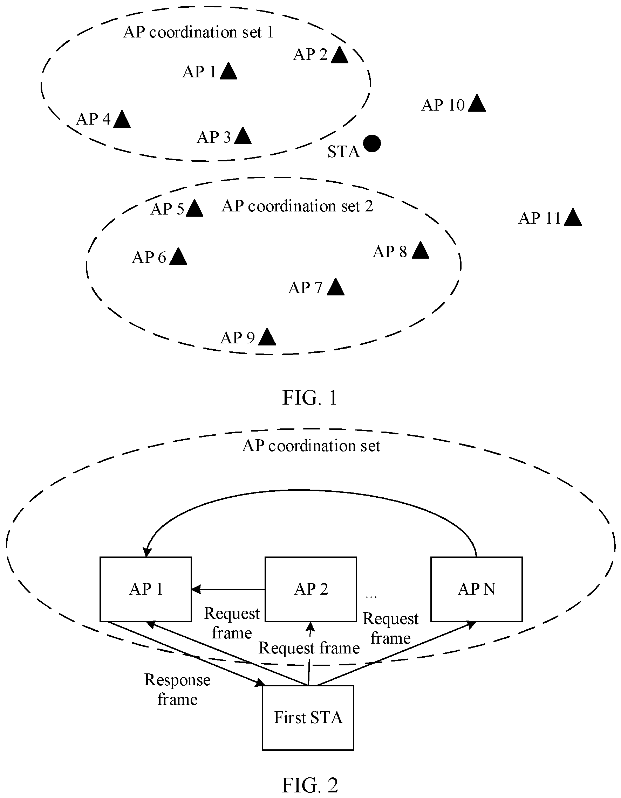

From a perspective of a single STA, a neighboring AP of the STA is deployed around the STA, and the neighboring AP of the STA may receive information from the STA. The neighboring AP of the STA may include one or more AP coordination sets. FIG. 1 is a diagram of deployment of neighboring APs of an STA. The STA may have, for example, 11 neighboring APs: an AP 1 to an AP 11, and the neighboring APs of the STA may include two AP coordination sets: an AP coordination set 1 and an AP coordination set 2. Four APs: the AP 1 to an AP 4 may belong to the AP coordination set 1, five APs: an AP 5 to an AP 9 may belong to the AP coordination set 2, and an AP 10 and the AP 11 may not belong to any AP coordination set. For ease of drawing, in FIG. 1, APs in a same AP coordination set are close to each other. During actual implementation, two APs that are far away from each other may also belong to a same AP coordination set.

### 2. Transmission manner of a current response frame and existing disadvantages

In some implementations, the STA may send a probe request frame to the neighboring AP in a broadcast manner. The probe request frame may be used by the STA to request to obtain identification information of the neighboring AP. Further, the probe request frame may be used by the STA to request to obtain some information about the neighboring AP, and the information may help the STA determine an AP to which the STA roams. The AP 1 that receives the probe request frame preempts a channel to reply with a probe response frame that includes information only about the AP 1. If the AP 1 fails to preempt the channel this time, the AP 1 may wait for next channel preemption until the probe response frame is successfully sent. Each AP replies with one probe response frame that includes information only about the AP. In this case, one probe response frame includes information only about one AP, which causes low transmission efficiency of the probe response frame.

In addition, in the plurality of neighboring APs of the STA, each AP needs to reply with a probe response frame. In this case, the plurality of neighboring APs reply in a time period after receiving the probe request frame, which causes a case in which a plurality of probe response frames occupy a channel in the time period. Consequently, air interface overheads are greatly increased, and a throughput of a wireless network is reduced.

For example, there may be a plurality of APs and a plurality of STAs in a stadium. It can be learned by performing packet capturing and analyzing on a radio frame transmitted in the stadium that, if the current response frame transmission method is used, transmission duration of probe response frames replied by the plurality of APs accounts for up to 53.4% of transmission duration of all radio frames. It is clear that the transmission duration of the probe response frames occupies more than half of the transmission duration of all the radio frames. In other words, in comparison with a type of radio frame other than the probe response frame, air interface overheads of the probe response frames are high, which limits transmission of the type of radio frame other than the probe response frame.

The following describes the technical solutions in embodiments of this application with reference to the accompanying drawings in embodiments of this application. Unless otherwise specified, "/" in the descriptions of this application indicates an "or" relationship between associated objects. For example, A/B may indicate A or B. In this application, "and/or" indicates only an association relationship for describing associated objects and indicates that three relationships may exist. For example, A and/or B may indicate the following three cases: Only A exists, both A and B exist, and only B exists. A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

FIG. 2 is a diagram of a network architecture of a transmission system according to an embodiment of this application. The network includes a first STA and N APs, where N is a positive integer greater than or equal to 2. The N APs belong to a same AP coordination set, that is, the N APs may communicate with each other. In addition, the N APs are neighboring APs of the first STA, that is, each of the N APs may communicate with the first STA.

With reference to FIG. 1, the first STA in FIG. 2 may be the STA in FIG. 1. A value of N in FIG. 2 may be 4. Correspondingly, an AP 1 to an AP 4 in FIG. 2 may be the AP 1 to the AP 4 in FIG. 1. Alternatively, a value of N in FIG. 2 may be 5. Correspondingly, an AP 1 to an AP 5 in FIG. 2 may be the AP 5 to the AP 9 in FIG. 1.

In embodiments of this application, the AP may be an AP device, or may be an AP multi-link device (multi-link device, MLD). The STA may be a (non-AP) STA device, or may be a non-AP MLD. This is not limited in embodiments of this application.

The MLD in embodiments of this application may be a single-antenna device, or may be a multi-antenna device. For example, the MLD may be a device with more than two antennas. A quantity of antennas included in the MLD is not limited in embodiments of this application. Frequency bands on which the multi-link device operates may include but are not limited to sub-1 GHz, 2.4 GHz, 5 GHz, 6 GHz, and a high-frequency 60 GHz.

The STA in embodiments of this application may be a wireless communication chip, a wireless sensor, or a wireless communication terminal, for example, a user terminal, a user apparatus, an access apparatus, a subscriber station, a subscriber unit, a mobile station, a user agent, and user equipment that support a Wi-Fi communication function. The user terminal may include various handheld devices, vehicle-mounted devices, wearable devices, Internet of things (Internet of things, IoT) devices, or compute devices that have a wireless communication function, or another processing device connected to a wireless modem, user equipment (user equipment, UE) of various forms, a mobile station (mobile station, MS), a terminal (terminal), a terminal device (terminal equipment), a portable communication device, a handheld device, a portable compute device, an entertainment device, a game device or system, a global positioning system device, or any other appropriate device configured to perform network communication via a wireless medium. In addition, the STA may support the 802.11be standard. The STA may also support a plurality of WLAN standards such as 802.11ax, 802.11ac, 802.11n, 802.11g, 802.11b, and 802.11a.

The AP in embodiments of this application may be an apparatus that is deployed in a wireless communication network to provide a wireless communication function for an STA associated with the AP. The AP is mainly deployed at home, inside a building, and in a campus, with a typical coverage radius of tens of meters to hundreds of meters. Certainly, the AP may alternatively be deployed outdoors. The AP is equivalent to a bridge that connects a wired network and a wireless network. The AP is mainly used to connect wireless network clients together, and then connect the wireless network to the Ethernet. Specifically, the AP may be a communication device with a Wi-Fi chip, for example, a base station, a router, a gateway, a repeater, a communication server, a switch, or a bridge. The base station may include a macro base station, a micro base station, a relay station, and the like in various forms. In addition, the AP may support the 802.11be standard. The AP may also support WLAN standards such as 802.11ax, 802.11ac, 802.11n, 802.11g, 802.11b, and 802.11a.

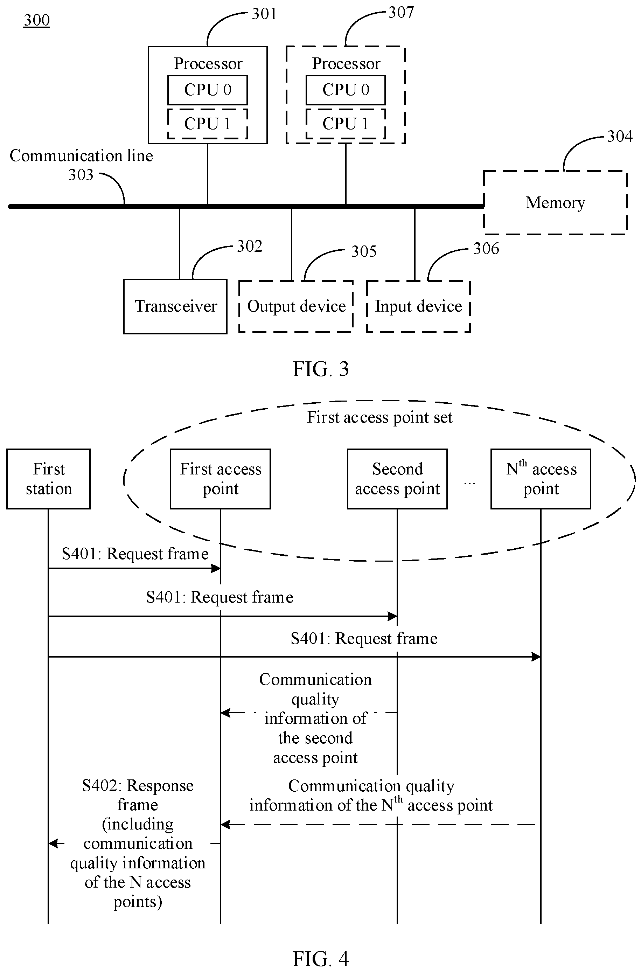

In some embodiments, the AP and the STA in this application may be collectively referred to as a WLAN device. During specific implementation, the WLAN device may use a composition structure shown in FIG. 3, or include components shown in FIG. 3.

FIG. 3 is a diagram of composition of a WLAN device 300 according to an embodiment of this application. The WLAN device 300 may be an STA, or a chip or a chip system (or referred to as a system on chip) in an STA; or may be an AP, or a chip or a chip system (or referred to as a system on chip) in an AP. In embodiments of this application, the chip system may include a chip, or may include a chip and another discrete component.

As shown in FIG. 3, the WLAN device 300 includes a processor 301, a transceiver 302, and a communication line 303. Further, the WLAN device 300 may include a memory 304. The processor 301, the memory 304, and the transceiver 302 may be connected through the communication line 303.

The processor 301 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 301 may be another apparatus having a processing function, for example, a circuit, a component, or a software module. This is not limited.

The transceiver 302 is configured to communicate with another device or another communication network. The another communication network may be the Ethernet, a radio access network (radio access network, RAN), a WLAN, or the like. The transceiver 302 may be a module, a circuit, a transceiver, or any apparatus that can implement communication.

The communication line 303 is configured to transmit information between components included in the WLAN device 300.

The memory 304 is configured to store instructions. The instructions may be a computer program.

The memory 304 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), magnetic disk storage medium or another magnetic storage device, or the like. This is not limited.

It should be noted that the memory 304 may exist independently of the processor 301, or may be integrated with the processor 301. The memory 304 may be configured to store the instructions, program code, some data, or the like. The memory 304 may be located inside the WLAN device 300, or may be located outside the WLAN device 300. This is not limited. The processor 301 is configured to execute the instructions stored in the memory 304, to perform a method provided in the following embodiment of this application.

In an example, the processor 301 may include one or more CPUs, for example, a CPU 0 and a CPU 1 in FIG. 3.

In an optional implementation, the WLAN device 300 includes a plurality of processors. For example, in addition to the processor 301 in FIG. 3, the WLAN device 300 may further include a processor 307.

In an optional implementation, the WLAN device 300 further includes an output device 305 and an input device 306. For example, the input device 306 is a device like a keyboard, a mouse, a microphone, or a joystick, and the output device 305 is a device like a display or a speaker (speaker).

It should be understood that the composition structure shown in FIG. 3 does not constitute a limitation on the WLAN device. In addition to the components shown in FIG. 3, the WLAN device may include more or fewer components than those shown in the figure, a combination of some components, or a different component layout.

The following describes a communication method provided in embodiments of this application in detail with reference to FIG. 1 to FIG. 3.

FIG. 4 shows a procedure of a communication method according to an embodiment of this application. The method includes the following steps.

Step S401: A first station sends a request frame, where the request frame is used to request communication quality information.

Specifically, the request frame is used by the first station to request to obtain communication quality information of neighboring access points. Correspondingly, the neighboring access point of the first station receives the request frame from the first station.

The neighboring access points of the first station include one or more access point sets, the neighboring access points of the first station include a first access point set, and the first access point set includes a first access point.

In embodiments of this application, the neighboring access point of the first station may be a surrounding node that communicates and shares data with the first station. When broadcasting the request frame, the first station may not determine an identifier of an access point that replies with a response frame.

For example, the request frame in embodiments of this application may be a probe request (probe request) frame, and the response frame in embodiments of this application may be a probe response (probe response) frame.

In embodiments of this application, the request frame may be used by the first station to request to obtain the communication quality information of the neighboring access points, to help the first station determine an access point to which the first station roams. Communication quality information of a neighboring access point may include at least one of the following: quality information of a channel between the neighboring access point and the first station, quality information of a signal between the neighboring access point and the first station, signal transmit power, signal receive power, or a roaming capability of the neighboring access point.

The quality information of the channel between the neighboring access point and the first station may include at least one of the following: a symbol error rate (symbol error rate, SER), channel bandwidth, a channel capacity, or a channel fading coefficient. The quality information of the signal between the neighboring access point and the first station may include at least one of the following: a received signal strength indication (received signal strength indication, RSSI) of a signal received by the neighboring access point from the first station, reference signal received power (reference signal received power, RSRP) of a signal received by the neighboring access point from the first station, a signal to interference plus noise ratio (signal to interference plus noise ratio, SINR) of a signal received by the neighboring access point from the first station, or reference signal received quality (reference signal received quality, RSRQ) of a signal received by the neighboring access point from the first station.

A roaming capability of an access point may include whether the access point can roam to another access point. When the access point can roam to the another access point, the roaming capability of the access point further includes identification information of the access point that the access point can roam to.

The access point set in this embodiment of this application may be, for example, an AP coordination set.

With reference to FIG. 1, the first station in FIG. 4 may be the STA in FIG. 1. The neighboring access points of the first station in the embodiment shown in FIG. 4 may be the AP 1 to the AP 11 in FIG. 1.

With reference to FIG. 2, the first station in FIG. 4 may be the first STA in FIG. 2. The neighboring access points of the first station in the embodiment shown in FIG. 4 may include the AP 1, the AP 2, ..., and the AP N in FIG. 2.

Step S402: The first access point sends a response frame to the first station, where the response frame includes communication quality information of a plurality of access points. Correspondingly, the first station receives the response frame from the first access point.

The plurality of access points are access points in the first access point set in which the first access point is located, that is, the plurality of access points belong to the first access point set. Because the neighboring access points of the first station include the first access point set, the plurality of access points belong to the neighboring access points of the first station. In addition, the plurality of access points include the first access point.

In this embodiment of this application, because there is a coordination relationship between the first access point and the plurality of access points, the first access point may replace the plurality of access points in the first access point set in which the first access point is located to reply with the response frame.

In this embodiment of this application, although the first access point, a second access point, ..., and an N^{th} access point in the first access point set all receive the request frame, only the first access point replies with the response frame. As shown in FIG. 4, in a possible implementation, the second access point, ..., and the N^{th} access point may send respective communication quality information to the first access point, and the first access point replies with the response frame to the first station. The response frame includes communication quality information of the N access points.

With reference to FIG. 1, when the first access point set is the AP coordination set 1, the plurality of access points in the embodiment shown in FIG. 4 may be at least two APs in the AP 1 to the AP 4 in FIG. 1. When the first access point set is the AP coordination set 2, the plurality of access points in the embodiment shown in FIG. 4 may be at least two APs in the AP 5 to the AP 9 in FIG. 1.

With reference to FIG. 2, the plurality of access points in the embodiment shown in FIG. 4 may be the AP 1, the AP 2, ..., and the AP N in FIG. 2. For an interaction procedure shown in FIG. 2, refer to descriptions of an interaction procedure shown in FIG. 4. Details are not described herein.

Optionally, the communication quality information of the plurality of access points includes communication quality information of each of the plurality of access points, and the communication quality information of each access point may include at least one of the following: quality information of a channel between each access point and the first station, quality information of a signal between each access point and the first station, or a roaming capability of each access point.

The quality information of the channel between each access point and the first station may include at least one of the following: an SER, channel bandwidth, a channel capacity, or a channel fading coefficient. The quality information of the signal between each access point and the first station may include at least one of the following: an RSSI of a signal received by each access point from the first station, RSRP of a signal received by each access point from the first station, an SINR of a signal received by each access point from the first station, or RSRQ of a signal received by each access point from the first station.

Optionally, the response frame further includes identification information, of the plurality of access points, used to identify identity (identity, ID) information of each access point. The response frame sent by the first access point to the first station includes identification information of each access point and communication quality information of an access point corresponding to the identification information of each access point.

For example, the plurality of access points may obtain RSSIs by measuring strength of the request frame from the first station.

The identification information of the access point in this embodiment of this application may be, for example, a media access control (media access control, MAC) address and/or an Internet protocol (Internet protocol, IP) address. Alternatively, the identification information of the access point in this embodiment of this application may be, for example, an identifier, of the access point, in the neighboring access point. Alternatively, the identification information of the access point in this embodiment of this application may be, for example, an identifier of the first access point set in which the access point is located and/or an identifier, of the access point, in the first access point set. The identifier of the first access point set is used to identify the first access point set in which the access point is located.

In a possible implementation, identifiers may be assigned to all the neighboring access points randomly or according to a specific rule. The specific rule may be a descending order of communication quality. In this implementation, one identifier may be used to identify one access point. In another possible implementation, an identifier may be first assigned to the access point set, and then an identifier is assigned to an access point in each access point set randomly or according to a specific rule. In this implementation, two identifiers may be used to identify one access point.

Optionally, quality of a signal between the first access point and the first station is higher than or equal to a first threshold. This solution helps ensure transmission quality of the response frame.

The following uses an example of which access point in the plurality of access points is used as the first access point.
(1) In a manner 1, the first access point is an access point corresponding to identification information included in the request frame.

In this embodiment of this application, the request frame may carry identification information of the first access point. In this solution, the first station may specify an access point that replies with the response frame, that is, the first station may specify the first access point. For example, the first access point in this manner may alternatively be an access point that has an association relationship with the first station.

In embodiments of this application, that the first station has an association relationship with the first access point may mean that the first station exchanges an association frame with the first access point.

After receiving the request frame, the plurality of access points may obtain the identification information of the first access point. In a possible implementation, an access point in the plurality of access points other than the first access point may send respective information to the first access point based on the identification information of the first access point, and the first access point replies with the response frame. In other words, information exchange between the plurality of access points is triggered by the request frame.

In another possible implementation, the plurality of access points may periodically exchange respective information. Because the communication quality information of the plurality of access points has been stored, the first access point may directly reply with the response frame to the first station after receiving the request frame.

(2) In a manner 2, the first access point is an access point that has an association relationship with the first station.

In this manner, there is an association relationship between the first access point and the first station, the association relationship is stored by each of the plurality of access points, and the association relationship is used by the first access point to obtain the communication quality information of the plurality of access points. In this solution, because an access point in the plurality of access points other than the first access point stores the association relationship between the first access point and the first station, after receiving the request frame from the first station, the another access point may send respective information to the first access point. This helps the first access point obtain the communication quality information of the plurality of access points.

For example, one access point may have an association relationship with a plurality of stations. The association relationship between the access point and the station may dynamically change. An access point may maintain (store and update) an association relationship between a station and each access point in an access point set in which the access point is located.

Optionally, in addition to the first access point, the plurality of access points further include a second access point, and the second access point stores the association relationship between the first access point and the first station. The second access point sends communication quality information of the second access point to the first access point based on the association relationship, and correspondingly, the first access point receives the communication quality information from the second access point.

In a possible implementation, that the second access point sends the communication quality information of the second access point to the first access point based on the association relationship includes: When receiving the request frame from the first station, the second access point sends the communication quality information of the second access point to the first access point based on the association relationship. In other words, the request frame is used to trigger sending of the communication quality information of the second access point to the first access point by the second access point.

In another possible implementation, the second access point and the first access point may periodically exchange respective information. After receiving the request frame, the second access point determines, based on the stored association relationship between the first access point and the first station, not to reply with the response frame to the first station. After receiving the request frame, the first access point replies, to the first station based on the stored association relationship between the first access point and the first station, with a response frame including the communication quality information of the second access point.

(3) In a manner 3, the first access point is an access point selected by a first device, and the first device is configured to manage an access point in the first access point set.

In embodiments of this application, the first device may be a device that has an upper-layer function of scheduling, managing, or controlling the plurality of access points. For example, the first device may be a primary access point or an access controller (access controller, AC).

The access point selected by the first device may have or may not have an association relationship with the first station. This is not limited in embodiments of this application.

Optionally, the first access point is an access point, in the first access point set, that has best signal quality with the first station. This solution helps ensure transmission quality of the response frame.

For example, the first access point is an access point, in the first access point set, that is closest to the first station; or the first access point is an access point with a maximum RSSI or a maximum signal-to-noise ratio (signal to noise ratio, SNR) in the first access point set.

In a possible implementation, the first device may summarize the communication quality information of the plurality of access points, and then transfer the communication quality information to the first access point selected by the first device. When the plurality of access points and the first access point have different operating channels and cannot directly communicate with each other, this implementation helps the first access point obtain the communication quality information of the plurality of access points.

For example, the first device belongs to an access point in the plurality of access points other than the first access point. In other words, in addition to the first access point, the plurality of access points further include a second access point, and the second access point is configured to manage an access point in the first access point set. In this case, the plurality of access points separately send the communication quality information of each access point to the second access point. Correspondingly, the second access point separately receives the communication quality information of each access point from the plurality of access points. The second access point sends the communication quality information of the plurality of access points to the first access point, and correspondingly, the first access point receives the communication quality information of the plurality of access points from the second access point.

For another example, the first device is a device other than the first station and the plurality of access points. In other words, the transmission system shown in FIG. 2 further includes a first device, and the first device is configured to manage an access point in the first access point set. In this case, the plurality of access points separately send the communication quality information of each access point to the first device. Correspondingly, the first device separately receives the communication quality information of each access point from the plurality of access points. The first device sends the communication quality information of the plurality of access points to the first access point, and correspondingly, the first access point receives the communication quality information of the plurality of access points from the first device.

In another possible implementation, the plurality of access points may directly send respective information to the first access point selected by the first device, and the first device does not need to forward the communication quality information of the plurality of access points. This implementation may be applied to a scenario in which the plurality of access points and the first access point have same operating channels and may directly communicate with each other. This implementation can simplify a procedure in which the first access point obtains the communication quality information of the plurality of access points.

Optionally, after summarizing the communication quality information of the plurality of access points, that is, separately receiving the communication quality information of each access point from the plurality of access points, the first device may directly send, to the first station, a response frame including the communication quality information of the plurality of access points.

In the communication method provided in embodiments of this application, in the plurality of access points, only the first access point replies with one response frame to the first station, and the response frame may carry the communication quality information of the plurality of access points. Compared with a method in which each of a plurality of access points replies with a response frame, the communication method provided in embodiments of this application can reduce air interface overheads, to improve a network throughput.

The following analyzes the foregoing technical effect by using an example in which the first access point set is the AP coordination set 1 in FIG. 1, and the plurality of access points in the embodiment shown in FIG. 4 are the AP 1 to the AP 4 in FIG. 1.

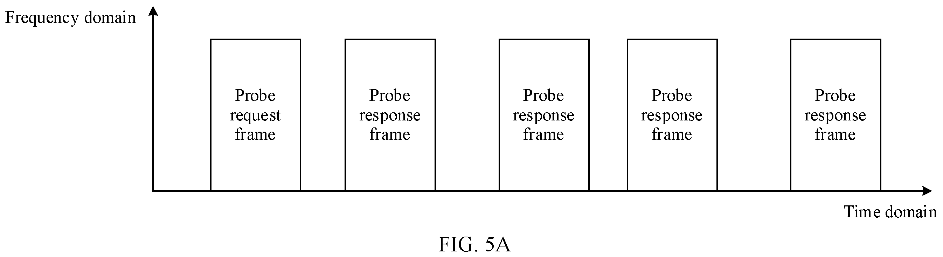

It is assumed that a current communication method is used. As shown in FIG. 5A, after receiving a probe request frame, each AP in the AP 1 to the AP 4 replies with a probe response frame to the first station, and each probe response frame carries information about a respective AP. In other words, frames transmitted through an air interface include five frames: one probe request frame and four probe response frames. The five frames occupy same frequency domain resources.

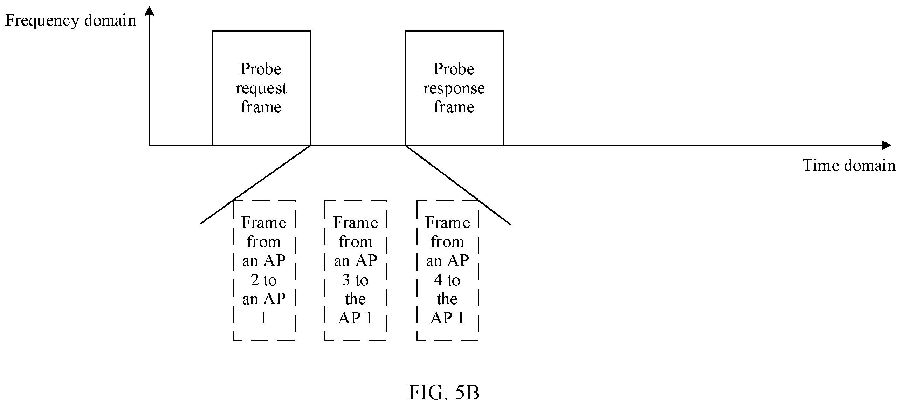

It is assumed that the communication method provided in embodiments of this application is used. As shown in FIG. 5B, after the AP 1 to the AP 4 receive a probe request frame, only the AP 1 replies with a probe response frame to the first station, and the probe response frame carries information about four APs. In other words, frames transmitted through an air interface include two frames: one probe request frame and one probe response frame. The two frames occupy same frequency domain resources. Transmission of frames between the APs (including a frame from the AP 2 to the AP 1, a frame from the AP 3 to the AP 1, and a frame from the AP 4 to the AP 1) may be triggered by the probe request frame, or may be periodically performed. In addition, the frame between the APs may be transmitted in a wired manner, that is, transmission of the frame between the APs may not occupy an air interface transmission resource.

It is clear that time domain resources occupied by the two frames are far fewer than time domain resources occupied by the five frames. In other words, according to the communication method provided in embodiments of this application, air interface overheads can be reduced, to achieve technical effect of improving a network throughput.

Optionally, that the first access point sends the response frame to the first station includes: The first access point sends the response frame to the first station through a first channel, where the first channel is one of a plurality of operating channels of the first station. Correspondingly, that the first station receives the response frame from the first access point includes: The first station receives the response frame from the first access point through the first channel.

For example, the first channel may be a primary 20 megahertz (MHz) channel of the first station. Usually, the primary 20 MHz channel of the first station and a primary 20 MHz channel of the access point associated with the first station may be a same channel.

The following analyzes technical effect of the foregoing solution by using an example in which the first access point set is the AP coordination set 1 in FIG. 1, and the plurality of access points in the embodiment shown in FIG. 4 are the AP 1 to the AP 4 in FIG. 1.

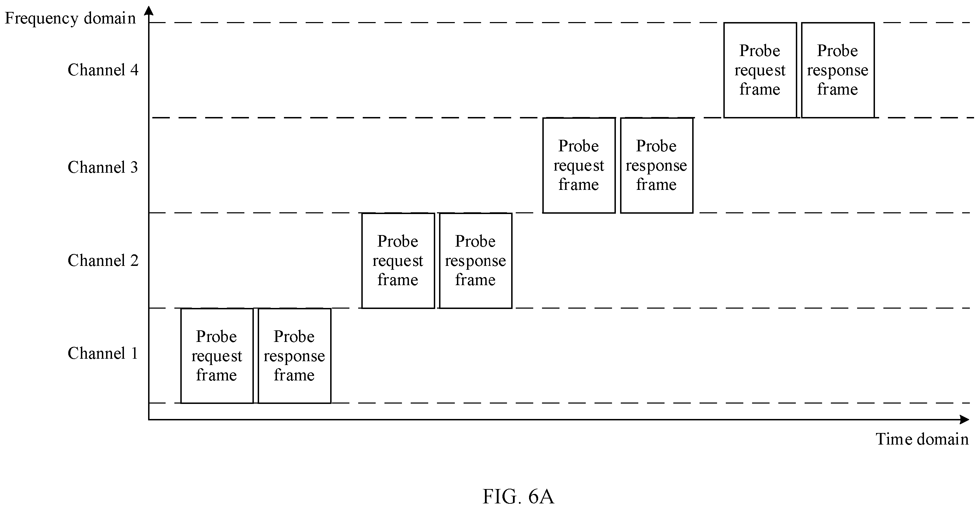

In a process in which the first station performs active scanning, it is assumed that a current communication method is used. As shown in FIG. 6A, after sending a probe request frame to the AP 1 through a channel 1, the first station needs to wait for receiving a probe response frame from the AP 1 on the channel 1. After receiving the probe response frame through the channel 1, the first station switches to a channel 2 to send the probe request frame to the AP 2, and waits to receive a probe response frame from the AP 2. The rest may be deduced by analogy until the first station receives a probe response frame from the AP 4 through a channel 4. In other words, the first station needs to wait to receive the probe response frame on the scanned channel.

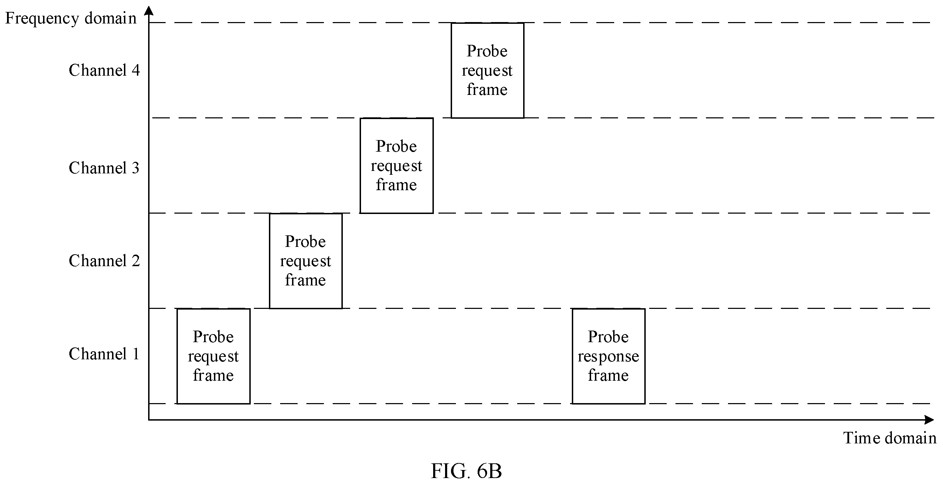

It is assumed that the communication method provided in embodiments of this application is used. As shown in FIG. 6B, the first station may quickly switch to a different channel to send a probe request frame, and then return to a specific channel (that is, the first channel may be a channel 1) to wait to receive, from the AP 1, a probe response frame including information about four APs.

It is clear that, in the communication method provided in embodiments of this application, the first station waits to receive the response frame through the first channel, and does not need to wait to receive a probe response frame through each scanned channel. This can shorten time for active scanning by the first station, to help the first station quickly determine a roaming target access point.

In this embodiment of this application, the first access point may operate on the first channel, that is, the first access point receives the request frame from the first station through the first channel. If the first access point does not operate on the first channel, that is, the first access point receives the request frame from the first station through a channel other than the first channel, the first access point may switch the operating channel to the first channel, and reply with a response frame through the first channel; or the first access point may send the response frame to the first device, and the first device forwards the response frame to the first station through the first channel.

In a possible implementation, in an active scanning process, the first STA quickly switches to a different channel to send the request frame, and does not need to stay on the scanned channel to wait to receive a response frame. In a possible implementation, the first STA notifies an associated AP (for example, the first AP) of information via the request frame, and indicates one or more other APs to share the information with the associated AP (for example, the first AP). The plurality of neighboring APs receive, through different channels, the request frame sent by the first STA, and share the communication quality information such as the RSSI with a specified AP (for example, the first AP), or report the communication quality information to the primary AP/AC. When quality of the channel between the first STA and the associated AP is not lower than a specified threshold, the associated AP may reply with the response frame. When the quality of the channel between the first STA and the associated AP is lower than the specified threshold, the primary AP/AC may specify another AP to reply with a response frame through the primary channel of the AP associated with the first STA. Therefore, during active scanning, the STA receives the response frame only through the primary channel of the associated AP, and does not need to stay on the scanned channel for long time. This can greatly shorten time for active scanning by the STA, and help quickly determine a roaming target AP.

In a possible implementation, the first station may determine in advance that an access point that sends the response frame is the first access point, and an operating channel of the first access point is the first channel. Then, the first station determines to wait to receive the response frame through the first channel on which the first access point is located. The request frame sent by the first station may carry an identifier of the first channel.

In another possible implementation, although the first station determines in advance that an access point for receiving the response frame is the first access point, the first station further selects a second channel as a channel for receiving the response frame. For example, channel quality of the second channel is better than that of the first channel. The request frame sent by the first station may carry an identifier of the second channel. In the case in which the access point that is determined in advance to reply with the response frame does not match the channel indicated by the station, optionally, when receiving the request frame that carries the identifier of the second channel, the first access point may switch, to the second channel, from the original operating channel on which the first access point is located, namely, the first channel; or switch, to the second access point whose operating channel is the second channel, from the access point that replies with the response frame, namely, the first access point whose operating channel is the first channel.

In another possible implementation, the first station does not determine in advance which access point sends the response frame. The first station may specify one of the plurality of operating channels of the first station as a channel for receiving the response frame. For example, the first station determines a channel with best channel quality in the plurality of operating channels as the first channel, and the first station may determine the first channel as the channel for receiving the response frame. The request frame sent by the first station carries the identifier of the first channel.

In a possible implementation, the request frame includes an identifier of the first channel.

In another possible implementation, the communication method provided in embodiments of this application further includes: The first station sends the identifier of the first channel to the first access point. Correspondingly, the first access point receives the identifier of the first channel from the first station. In this solution, the identifier of the first channel may be, for example, included in a management frame or a control frame. Before the first station sends the request frame, the first station may send the identifier of the first channel via the management frame or the control frame. The identifier of the first channel indicates the first station to monitor or receive a channel on which the response frame is located.

It may be understood that, in the foregoing embodiments, the method and/or the steps implemented by the first station may alternatively be implemented by a component (for example, a chip or a circuit) that may be used in the first station or an apparatus including the first station. The method and/or the steps implemented by the first access point may alternatively be implemented by a component (for example, a chip or a circuit) that may be used in the first access point or an apparatus including the first access point.

It may be understood that, to implement the foregoing functions, the first station or the first access point includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the first station and the first access point may be obtained through division based on the foregoing method embodiments. For example, the functional modules may be obtained through division corresponding to functions, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used.

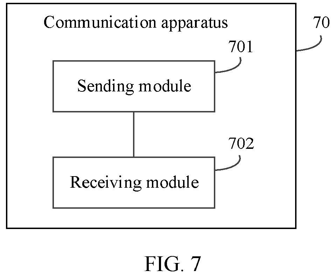

For example, the first station in embodiments of this application may be implemented in a form of a communication apparatus 70 shown in FIG. 7. The communication apparatus 70 includes a sending module 701 and a receiving module 702. The communication apparatus 70 is configured to implement the functions of the first station in the method embodiments shown in FIG. 4 to FIG. 6B.

For example, when the communication apparatus 70 is configured to implement the functions of the first station in the method embodiment shown in FIG. 4, the sending module 701 is configured to send a request frame. The receiving module 702 is configured to receive a response frame including communication quality information of a plurality of access points from a first access point.

For more detailed descriptions of the sending module 701 and the receiving module 702, refer to related descriptions in the method embodiments shown in FIG. 4 to FIG. 6B.

For another example, the first access point in embodiments of this application may alternatively be implemented in a form of a communication apparatus 70 shown in FIG. 7. The communication apparatus 70 is configured to implement the functions of the first access point in the method embodiments shown in FIG. 4 to FIG. 6B.

For example, when the communication apparatus 70 is configured to implement the functions of the first access point in the method embodiment shown in FIG. 4, the receiving module 702 is configured to receive a request frame from a first station. The sending module 701 is configured to send a response frame including communication quality information of a plurality of access points to the first station.

For more detailed descriptions of the sending module 701 and the receiving module 702, refer to related descriptions in the method embodiments shown in FIG. 4 to FIG. 6B.

In this embodiment, the communication apparatus 70 is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 70 may be in a form of the WLAN device 300 shown in FIG. 3.

For example, the processor 301 and/or the processor 307 in the WLAN device 300 shown in FIG. 3 may invoke computer-executable instructions stored in the memory 304, so that the WLAN device 300 performs the communication method in the foregoing method embodiments. Specifically, the sending module 701 and the receiving module 702 in FIG. 7 may be implemented by using the transceiver 302 in FIG. 3.

The communication apparatus 70 provided in this embodiment may perform the foregoing communication method. Therefore, for technical effect that can be achieved by the communication apparatus 70, refer to the foregoing method embodiments. Details are not described herein again.

It should be noted that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built in an SoC (system on chip) or an ASIC, or may be an independent semiconductor chip. The processor may further include a necessary hardware accelerator, for example, a field programmable gate array (field programmable gate array, FPGA), a PLD (programmable logic device), or a logic circuit that implements special logic operations, in addition to the core for executing software instructions to perform operations or processing.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface, where the at least one processor is coupled to a memory through an interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete device. This is not specifically limited in embodiments of this application.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims of this application and their equivalent technologies.

## Claims

1. A communication method, applied to a chip in a first access point or a first access node, and comprising:
receiving a request frame from a first station, wherein the request frame is used to request communication quality information; and
sending a response frame to the first station, wherein the response frame comprises communication quality information of a plurality of access points, the plurality of access points are access points in a first access point set, and the first access point set comprises the first access point.

2. The method according to claim 1, wherein the response frame further comprises identification information of the plurality of access points.

3. The method according to claim 1 or 2, wherein the method further comprises receiving the communication quality information of the plurality of access points.

4. The method according to any one of claims 1 to 3, wherein the request frame carries identification information of the first access point.

5. The method according to any one of claims 1 to 3, wherein there is an association relationship between the first access point and the first station, the association relationship is stored by each of the plurality of access points, and the association relationship is used by the first access point to obtain the communication quality information of the plurality of access points.

6. The method according to any one of claims 1 to 5, wherein quality of communication between the first access point and the first station is higher than or equal to a first threshold.

7. The method according to claim 1 or 2, wherein the first access point is an access point selected by a first device, and the first device is configured to manage an access point in the first access point set.

8. The method according to claim 7, wherein the first device comprises an access point or an access controller AC.

9. The method according to claim 7 or 8, wherein the method further comprises:
receiving the communication quality information of the plurality of access points from the first device, wherein the first device is configured to receive the communication quality information of the plurality of access points sent by the plurality of access points.

10. The method according to any one of claims 7 to 9, wherein the first access point is an access point, in the first access point set, that has best signal quality with the first station.

11. The method according to any one of claims 6 to 10, wherein the first access point is an access point, in the first access point set, that is closest to the first station; or
the first access point is an access point with a maximum received signal strength indication RSSI or a maximum signal-to-noise ratio SNR in the first access point set.

12. The method according to any one of claims 1 to 11, wherein the communication quality information of the plurality of access points comprises communication quality information of each of the plurality of access points, and the communication quality information of each access point comprises at least one of the following: quality information of a channel between each access point and the first station, quality information of a signal between each access point and the first station, or a roaming capability of each access point.

13. The method according to any one of claims 1 to 12, wherein the quality information of the channel between each access point and the first station comprises at least one of the following: a symbol error rate SER, channel bandwidth, a channel capacity, or a channel fading coefficient; and
the quality information of the signal between each access point and the first station comprises at least one of the following: an RSSI of a signal received by each access point from the first station, RSRP of a signal received by each access point from the first station, an SINR of a signal received by each access point from the first station, or RSRQ of a signal received by each access point from the first station.

14. The method according to any one of claims 1 to 13, wherein the sending the response frame to the first station comprises:
sending the response frame to the first station through a first channel, wherein the first channel is one of a plurality of operating channels of the first station.

15. The method according to claim 14, wherein the request frame comprises an identifier of the first channel.

16. The method according to claim 14, wherein the method further comprises:
receiving the identifier of the first channel from the first station.

17. A communication method, applied to a first station or a chip in the first station, and comprising:
sending a request frame, wherein the request frame is used to request to obtain communication quality information; and
receiving a response frame from a first access point, wherein the response frame comprises communication quality information of a plurality of access points, the plurality of access points are access points in a first access point set, and the first access point set comprises the first access point.

18. The method according to claim 17, wherein the response frame further comprises identification information of the plurality of access points.

19. The method according to claim 17 or 18, wherein the request frame carries identification information of the first access point.

20. The method according to claim 17 or 18, wherein there is an association relationship between the first access point and the first station, the association relationship is stored by each of the plurality of access points, and the association relationship is used by the first access point to obtain the communication quality information of the plurality of access points.

21. The method according to claim 17 or 18, wherein the first access point is an access point selected by a first device, and the first device is configured to manage an access point in the first access point set.

22. The method according to claim 21, wherein the first device comprises an access point or an access controller AC.

23. The method according to claim 21 or 22, wherein the first access point is an access point, in the first access point set, that has best signal quality with the first station.

24. The method according to any one of claims 21 to 23, wherein the first access point is an access point, in the first access point set, that is closest to the first station; or
the first access point is an access point with a maximum received signal strength indication RSSI or a maximum signal-to-noise ratio SNR in the first access point set.

25. The method according to any one of claims 17 to 24, wherein the communication quality information of the plurality of access points comprises communication quality information of each of the plurality of access points, and the communication quality information of each access point comprises at least one of the following: quality information of a channel between each access point and the first station, quality information of a signal between each access point and the first station, or a roaming capability of each access point.

26. The method according to claim 25, wherein the quality information of the channel between each access point and the first station comprises at least one of the following: a symbol error rate SER, channel bandwidth, a channel capacity, or a channel fading coefficient; and
the quality information of the signal between each access point and the first station comprises at least one of the following: an RSSI of a signal received by each access point from the first station, RSRP of a signal received by each access point from the first station, an SINR of a signal received by each access point from the first station, or RSRQ of a signal received by each access point from the first station.

27. The method according to any one of claims 17 to 26, wherein the receiving the response frame from the first access point comprises:
receiving the response frame from the first access point through a first channel, wherein the first channel is one of a plurality of operating channels of the first station.

28. The method according to claim 27, wherein the sending the request frame comprises:
separately sending the request frame through a plurality of channels, wherein a communication channel between the first access point and the first station is the first channel.

29. The method according to claim 27 or 28, wherein the request frame comprises an identifier of the first channel.

30. The method according to claim 27 or 28, wherein the method further comprises:
sending the identifier of the first channel.

31. A transmission system, comprising a first station and a plurality of access points, wherein the plurality of access points belong to a first access point set, and the plurality of access points comprise a first access point;
the first station is configured to send a request frame, wherein the request frame is used to request communication quality information; and
the first access point is configured to receive the request frame from the first station, and send a response frame to the first station, wherein the response frame comprises communication quality information of the plurality of access points.

32. The transmission system according to claim 31, wherein the plurality of access points further comprise a second access point;
the second access point is configured to store an association relationship between the first access point and the first station; and
the second access point is further configured to send communication quality information of the second access point to the first access point based on the association relationship, and the first access point is further configured to receive the communication quality information from the second access point.

33. The transmission system according to claim 32, wherein that the second access point is further configured to send the communication quality information of the second access point to the first access point based on the association relationship comprises:
the second access point is further configured to: when receiving the request frame from the first station, send the communication quality information of the second access point to the first access point based on the association relationship.

34. The transmission system according to claim 31, wherein the plurality of access points further comprise a second access point, and the second access point is configured to manage an access point in the first access point set;
the plurality of access points are configured to separately send communication quality information of each access point to the second access point;
the second access point is configured to separately receive the communication quality information of each access point from the plurality of access points; and
the second access point is further configured to send the communication quality information of the plurality of access points to the first access point, and the first access point is further configured to receive the communication quality information of the plurality of access points from the second access point.

35. The transmission system according to claim 31, wherein the transmission system further comprises a first device, and the first device is configured to manage an access point in the first access point set;
the plurality of access points are configured to separately send communication quality information of each access point to the first device;
the first device is configured to separately receive the communication quality information of each access point from the plurality of access points;
the first device is further configured to send the communication quality information of the plurality of access points to the first access point; and
the first access point is further configured to receive the communication quality information of the plurality of access points from the first device.

36. A communication method, wherein the method comprises:
sending, by a first station, a request frame, wherein the request frame is used to request communication quality information; and
receiving, by a first access point, the request frame from the first station, and sending a response frame to the first station, wherein the response frame comprises communication quality information of the plurality of access points, and the plurality of access points are access points in a first access point set in which the first access point is located.

37. A communication apparatus, comprising a receiving module and a sending module, wherein
the receiving module is configured to receive a request frame from a first station, wherein the request frame is used to request communication quality information; and
the sending module is configured to send a response frame to the first station, wherein the response frame comprises communication quality information of a plurality of access points, and the plurality of access points are access points in a first access point set in which the first access point is located.

38. A communication apparatus, comprising a sending module and a receiving module, wherein
the sending module is configured to send a request frame, wherein the request frame is used to request communication quality information; and
the receiving module is configured to receive a response frame from a first access point, wherein the response frame comprises communication quality information of a plurality of access points, and the plurality of access points are access points in a first access point set in which the first access point is located.

39. A communication apparatus, comprising a memory and a processor coupled to the memory, wherein the memory is configured to store a program, the processor is configured to execute the program stored in the memory, and when the communication apparatus runs, the processor runs the program, to enable the communication apparatus to perform the method according to any one of claims 1 to 16 or the method according to any one of claims 17 to 30.

40. A computer-readable storage medium, wherein the computer-readable storage medium stores a computer program; and when the computer program is executed by a computer, the computer is enabled to perform the method according to any one of claims 1 to 16, or when the computer program is executed by a computer, the computer is enabled to perform the method according to any one of claims 17 to 30.

41. A chip, wherein the chip comprises a processor and a memory, the memory is configured to store instructions; and the processor is configured to run the instructions, to enable an apparatus comprising the chip to perform the method according to any one of claims 1 to 16, or the processor is configured to run the instructions, to enable an apparatus comprising the chip to perform the method according to any one of claims 17 to 30.

42. A computer program product, wherein the computer program product comprises computer instructions, and when the computer instructions are run on a computer, the computer is enabled to perform the method according to any one of claims 1 to 16 or the method according to any one of claims 17 to 30.
